# NOUVEAU FASCICULE DE BREVET EUROPEEN

(11) **EP 0 326 774 B2**
(45) Date de publication et mention de la décision concernant l'opposition: **13.09.1995**
(45) Mention de la délivrance du brevet: 06.03.1991
(21) Numéro de dépôt: 88403342.4
(22) Date de dépôt: 28.12.1988
(51) Int. Cl.: F16D 66/02, F16D 55/22

(54) **Frein à disque et patin de frein utilisable dans un tel frein**
Scheibenbremse und Bremsbacke dafür
Disc brake and brake pad therefor

(30) Priorité: 05.02.1988 FR 8801332; 25.11.1988 FR 8815403
(43) Date de publication de la demande: 09.08.1989
(73) Titulaire: ALLIEDSIGNAL EUROPE SERVICES TECHNIQUES, 93700 Drancy (FR)
(72) Inventeur: Le Deit, Gerard, F-93700 Drancy (FR)
(74) Mandataire: Bentz, Jean-Paul

(56) Documents cités:
- EP-A- 0 072 192
- EP-A- 0 191 597
- DE-A- 2 832 443
- FR-A- 2 317 560
- FR-A- 2 415 232
- US-A- 4 241 327

## Description

L'invention concerne un frein à disque selon le préambule de la revendication 1, ainsi qu'un patin de frein utilisable dans un tel frein destiné à équiper un véhicule automobile.

Un frein à disque comprend de façon connue un étrier chevauchant un disque de frein, ainsi que des moyens de serrage associés à l'étrier de façon à déplacer au moins deux patins de frein vers les faces opposées du disque.

Dans un premier type de frein à disque, dit à étrier fixe, l'étrier est monté directement sur une partie non tournante du véhicule et des moyens de serrage indépendants agissent sur les patins de frein situés de chaque côté du disque.

Au contraire, dans les freins à disque dits à étrier coulissant, l'étrier est monté sur un support fixé à une partie non tournante du véhicule, par l'intermédiaire de moyens de guidage autorisant un déplacement de cet étrier dans une direction parallèle à l'axe du disque. Les moyens de serrage agissent alors directement sur l'un des patins pour l'appliquer contre la face correspondante du disque. L'application contre l'autre face du disque du patin situé de l'autre côté est obtenue indirectement sous l'effet du coulissement de l'étrier sur le support fixe.

L'invention, qui s'applique indifféremment à ces deux types de freins à disque, concerne plus précisément le cas où les patins sont logés dans des fenêtres formées dans un organe support. Dans le cas d'un frein à étrier fixe, cet organe support est l'étrier. Au contraire, dans le cas d'un frein à étrier coulissant, l'organe support dans lequel sont logés les patins peut être indifféremment soit l'étrier soit, de préférence, le support fixe sur lequel coulisse l'étrier.

Dans les freins à disque ainsi conçus, le couple de freinage engendré par la venue en contact des garnitures de friction des patins contre le disque tournant est transmis directement des patins à l'organe support par la venue en appui des patins contre des surfaces d'ancrage formées sur cet organe.

Compte tenu notamment des tolérances de fabrication et de montage, il existe nécessairement un certain espace entre le disque tournant et les parties de l'organe support dans lesquelles sont formées les surfaces d'ancrage servant d'appui aux patins lors du freinage.

Cet espace augmente régulièrement avec l'usure du disque. Lorsqu'il est supérieur à l'épaisseur de la plaque porte-garniture des patins, on considère que le système de freinage devient dangereux puisque les patins, à un certain degré d'usure des garnitures de friction, peuvent glisser dans cet espace, ce qui entraîne la disparition totale du freinage sur la roue concernée, ainsi qu'une augmentation de la course de la pédale de frein qui peut provoquer la perte totale du freinage sur l'ensemble du véhicule. De ce fait, il est nécessaire d'en informer le conducteur du véhicule et de l'obliger à changer le disque en même temps que les patins usés.

L'invention a précisément pour objet un tel frein dont la conception originale lui permet à la fois de supprimer le risque d'échappement des patins, d'informer le conducteur du véhicule du degré d'usure du disque, et d'endommager celui-ci d'une façon irréversible telle qu'il soit nécessaire de le changer. Le frein selon l'invention permet également de compenser partiellement la perte d'efficacité due à l'usure des garnitures de friction.

L'invention a aussi pour objet un patin de frein dont la structure particulière lui permet d'être utilisé avantageusement dans un tel frein à disque.

L'invention s'applique donc à un frein à disque comprenant un étrier chevauchant un disque de frein et équipé de moyens de serrage aptes à déplacer au moins deux patins de frein vers les faces opposées du disque, chaque patin étant logé et ancré dans une fenêtre formée dans un organe support et étant constitué par une plaque porte-garniture et une garniture de friction.

De manière connue par exemple du document US-A-4 241 327, la plaque porte-garniture comporte au moins une partie faisant saillie radialement au-delà du bord périphérique du disque et portant au moins un pion faisant saillie axialement vers le disque au-delà du bord périphérique de ce dernier, et formant un dispositif avertisseur sonore d'usure.

Selon l'invention, la partie faisant saillie radialement pénètre dans une lumière pratiquée dans ledit étrier à cet effet avec un jeu circonférentiel détermine et le pion est réalisé en acier trempé, l'agencement étant tel que, lorsque l'espace entre une face du disque et la partie correspondante de l'organe support devient, par suite de l'usure du disque et des patins, supérieur à l'épaisseur de la plaque porte-garniture disposée en regard de ladite face du disque, la partie en saillie puisse venir en appui sur le bord de la lumière créant un couple amenant le pion sur le bord périphérique du disque.

De préférence, chaque plaque porte-garniture comporte deux parties faisant saillie disposées symétriquement par rapport à un plan médian du frein contenant l'axe du disque, chaque partie faisant saillie portant un pion, et l'étrier comporte deux lumières correspondantes.

Grâce aux caractéristiques ainsi définies, lorsque le disque est usé et que la garniture de friction de l'un des patins est également usée, si la plaque porte-garniture de ce patin commence à glisser entre l'organe support et le disque en s'échappant de la fenêtre formée à cet effet dans l'organe support, le jeu qui existait à l'origine entre la partie en saillie du patin et le bord de la lumière formée dans l'étrier est immédiatement rattrapé. La partie en saillie du patin prend alors appui sur le bord de cette lumière et l'échappement du patin est empêché.

De plus, étant donné que le point d'appui de la partie en saillie du patin sur le bord de la lumière formée dans l'étrier est décalé radialement vers l'extérieur par rapport au centre d'action du patin sur le disque, un couple de basculement du patin est engendré. Ce couple tend à appliquer le pion porté par la partie en saillie du patin sur le bord périphérique du disque. Le frottement de ce pion sur le disque produit un bruit important qui a pour effet d'avertir immédiatement et de façon certaine le conducteur du véhicule de cette situation. De plus, la venue en appui du pion sur le bord périphérique du disque provoque un flottement supplémentaire qui compense partiellement la baisse d'efficacité du frein résulant de l'usure des garnitures de friction.

Enfin, le pion mord le bord périphérique du disque et en diminue le rayon de façon telle qu'il faut le changer en même temps que les patins usés.

L'invention concerne bien évidemment le patin de frein correspondant.

Un mode de réalisation préféré de l'invention va maintenant être décrit, à titre d'exemple nullement limitatif, en se référant aux dessins annexés dans lesquels :
- la figure 1 est une vue de dessus, en coupe partielle, d'un frein à disque réalisé conformément à l'invention ; et
- la figure 2 est une vue de côté, en coupe selon la ligne II-II de la figure 1.

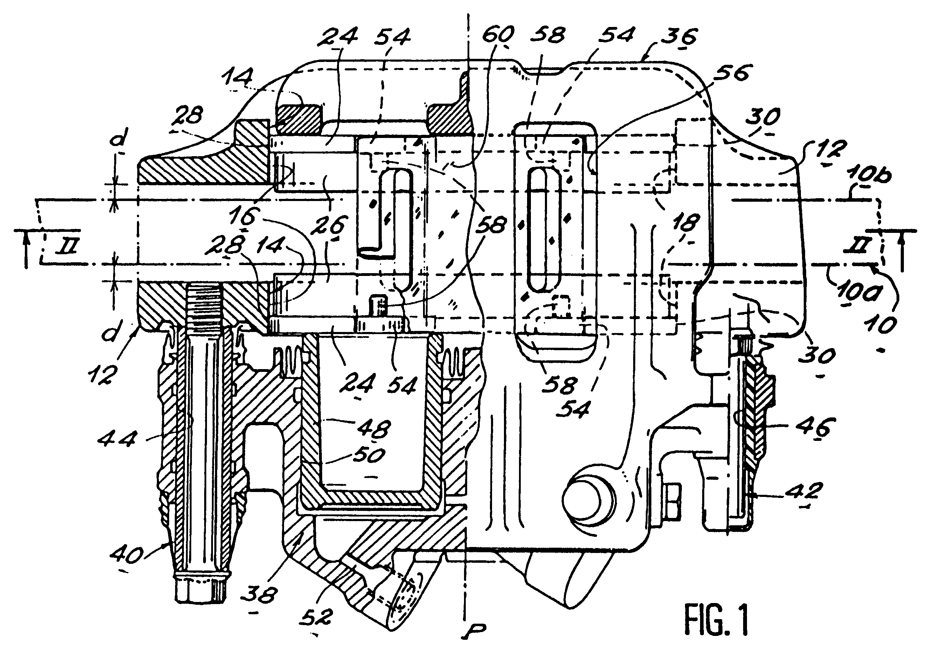

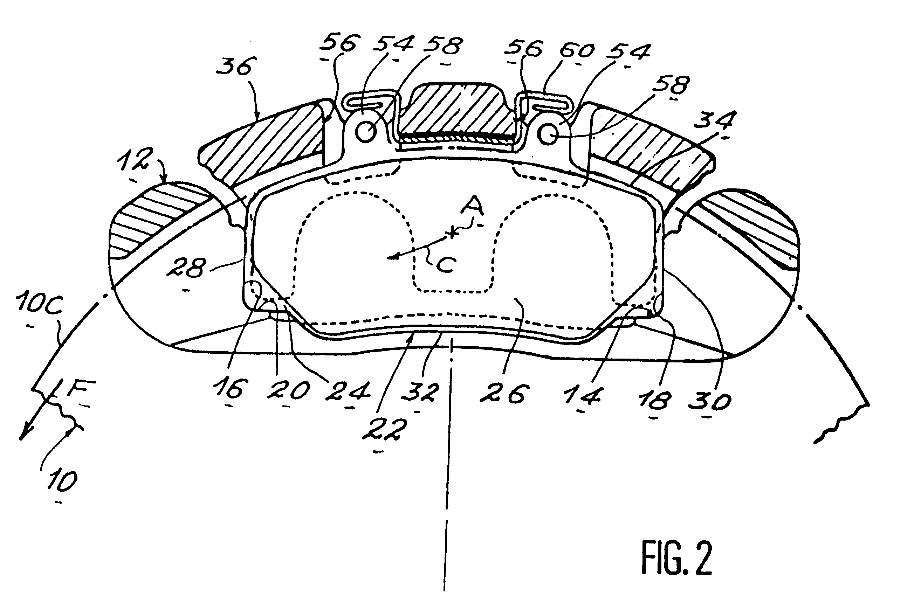

Le frein à disque représenté à titre d'exemple figures 1 et 2 est un frein à étrier coulissant. Ce frein comprend un disque de frein 10, représenté en traits mixtes pour ne pas surcharger les figures, prévu pour être fixé sur une partie tournant avec une roue du véhicule, telle qu'un moyeu de roue. Ce disque 10 comporte deux faces planes parallèles et opposées 10a et 10b, perpendiculaires à son axe, et un bord périphérique 10c.

Le frein à disque représenté figures 1 et 2 comprend de plus un organe support 12 prévu pour être fixé à une partie non tournante du véhicule adjacente au disque 10. L'organe support 12 chevauche le disque 10 en deux emplacements circonférentiellement espacés par rapport à ce dernier (figure 2) et il comporte deux parties latérales approximativement planes situées en face de chacune des faces 10a et 10b du disque et espacées de ces faces d'une certaine distance d (figure 1).

Dans chacune de ces deux parties latérales de l'organe support 12 est ménagée une fenêtre désignée de façon générale par la référence 14. Les fenêtres 14 présentent une configuration approximativement rectangulaire et elles sont ouvertes du côté du bord périphérique 10c du disque, comme représenté figure 2. Chacune des fenêtres 14 définit ainsi deux surfaces d'ancrage parallèles et opposées 16 et 18 et une surface de supportage 20, qui peut être limitée à deux zones adjacentes aux surfaces 16 et 18.

Dans chacune des fenêtres 14 est logé un patin de frein désigné de façon générale par la référence 22. Chacun de ces patins de frein comprend de façon connue une plaque porte-garniture 24 et une garniture de friction 26 fixée sur la plaque porte-garniture, du côté du disque 10.

La plaque porte-garniture 24 de chacun des patins comporte deux bords d'ancrage opposés 28,30 qui sont ancrés en appui contre les surfaces d'ancrage 16,18 des fenêtres correspondantes, selon le sens de rotation du disque 10. Les bords d'ancrage 28,30 formés sur la plaque porte-garniture de chacun des patins 22 sont reliés par un bord de liaison inférieur 32 et par un bord de liaison supérieur 34. Chacun des patins 22 repose sur la surface de supportage 20 de la fenêtre 14 dans laquelle il est reçu par son bord de liaison inférieur 32, comme l'illustre la figure 2.

En plus du disque 10, de l'organe support 12 et des patins de frein 22, le frein à disque représenté comprend un étrier 36 qui chevauche le disque 10 de façon à pouvoir appliquer les garnitures de friction 26 des patins de frein 22 contre les faces correspondantes du disque, lors de l'actionnement de moyens de serrage 38 supportés par cet étrier.

De façon plus précise, l'étrier 36 est supporté par l'organe support 12, par l'intermédiaire de moyens de guidage autorisant un déplacement de l'étrier selon une direction parallèle à l'axe du disque. Dans l'exemple de réalisation représenté, ces moyens de guidage comprennent deux colonnettes 40 et 42, circonférentiellement espacées et fixées par tout moyen approprié tel que par vissage sur la partie latérale de l'organe support 12 par laquelle ce dernier est fixé sur une partie fixe du véhicule. Les colonnettes 40 et 42 sont orientées parallèlement à l'axe du disque et en éloignement de ce dernier, de façon à pénétrer dans des alésages correspondants 44 et 46 formés dans l'étrier 36.

Dans sa partie située du côté des alésages 44 et 46, l'étrier 36 comporte en outre au moins un moteur de frein hydraulique (deux figure 1) constituant les moyens de serrage 38 dans l'exemple représenté. Chacun des moteurs de frein est constitué, de façon connue, d'un piston 48 monté coulissant de façon étanche dans un alésage borgne 50 ménagé dans l'étrier et débouchant du côté du disque 10, les axes communs aux pistons et aux alésages étant parallèles à l'axe du disque. Les pistons 48 sont en appui sur la plaque porte-garniture 24 du patin de frein 22 placé en regard de la face 10a du disque.

Un liquide de freinage sous pression injecté par des passages 52 formés dans l'étrier permet de déplacer les pistons 48 vers la face 10a du disque 10. Ce déplacement des pistons 48 vers le disque a pour effet d'appliquer la garniture de friction 26 du patin 22 correspondant contre la face 10a du disque 10. Par réaction, l'étrier 36 se déplace en sens inverse du piston 48 sur les colonnettes 40 et 42. Etant donné que l'étrier 36 est en appui de l'autre côté du disque sur la face arrière de la plaque porte-garniture 24 du deuxième patin 22, ce déplacement de l'étrier 36 conduit à appliquer également la garniture de friction 26 de ce deuxième patin contre la face 10b du disque. Une action de freinage est ainsi obtenue, d'une façon en elle-même classique dans les freins à disque à étrier coulissant.

Comme on l'a déjà mentionné, après usure du disque, lorsque l'une au moins des garnitures de friction 26 équipant les patins 22 est totalement usée, le jeu d existant entre l'organe support 12 et les faces en regard du disque 10 est tel que la plaque porte-garniture 24 du patin correspondant peut glisser entre le disque et l'organe support.

Pour supprimer ce danger, de façon connue, le bord de liaison supérieur 34 de la plaque porte-garniture 24 de chaque patin comprend au moins une partie faisant saillie radialement vers l'extérieur au-delà du bord périphérique 10c du disque, cette partie portant un pion 58 faisant saillie axialement vers le disque 10 au-delà du bord périphérique 10c de ce dernier.

Dans l'exemple représenté sur les figures, chaque patin comporte deux parties en saillie 54 en forme d'oreilles pénètrant dans deux lumières correspondantes 56 formées dans la partie de l'étrier 36 surplombant le disque. Plus précisément, chacune des lumières 56 de l'étrier reçoit avec un jeu circonférentiel donné une partie en saillie 54 de chacun des patins de frein. Les lumières 56 ont approximativement en vue de dessus une forme rectangulaire, comme l'illustre la partie droite de la figure 1.

De préférence, les deux patins de frein sont identiques. Chacun des patins 22 est alors parfaitement symétrique par rapport à un plan médian P (figure 1) de ce patin orienté parallèlement à ses bords d'ancrage 28 et 30. En particulier, les parties en saillie 54 de chacun des patins 22 sont disposées symétriquement par rapport à ce plan médian P. De façon correspondante, les deux lumières 56 formées dans l'étrier 36 sont également disposées symétriquement par rapport à un plan médian du frein contenant l'axe du disque et confondu avec le plan médian P de chacun des patins 22, lorsque ceux-ci sont montés dans le frein.

Les pions sont réalisés dans un matériau résistant à l'usure, tel l'acier trempé, pour pouvoir endommager suffisamment le disque et résister à un nombre déterminé d'applications d'un couple important de freinage. Dans un tel exemple de réalisation, on a utilisé de l'acier trempé à poinçon du type 35NCD4.

La longueur de chacun des pions 58 est inférieure à la moitié de l'épaisseur considérée comme dangereuse pour le disque.

D'une manière en elle-même connue, un moyen élastique constitué dans l'exemple de réalisation représenté par une lame de ressort 60, prend appui sur l'étrier 36 et sur le bord de liaison supérieur 34 de chacun des patins 22, afin d'appliquer en permanence le bord de liaison inférieur 32 de chacun des patins contre la surface de supportage 20 de la fenêtre 14 correspondante formée dans l'organe support 12. Ce ressort 60 peut notamment prendre appui au-dessous de la partie de l'étrier 36 surplombant le disque et située entre les lumières 56, et sur chacune des parties en saillie 54 des patins 22, comme l'illustrent les figures.

Lorsque le disque 10 est usé et que la garniture de friction 26 de l'un au moins des patins 22 est également usée, la largeur d de l'espace formé entre chacune des faces 10a et 10b du disque et les parties latérales adjacentes de l'organe support 12 est telle que la plaque porte-garniture 24 de ce patin peut sortir de la fenêtre 14 correspondante et avoir tendance à glisser dans cet espace.

Conformément à l'invention, lorsque cela se produt, le jeu circonférentiel existant initialement entre la partie en salle 54 de ce patin située vers l'avant en considérant le sens de rotation F du disque 10 (figure 2) et le bord de la lumière 56 formée dans l'étrier fait que le patin 22 vient en appui contre le bord de la lumière 56 correspondante le plus proche de l'avant du frein. Le glissement du patin entre le disque et l'organe support est ainsi stoppé.

De plus, la venue en appui de la partie en saillie 54 située vers l'avant du patin contre le bord de la lumière 56 correspondante a lieu en un emplacement qui est décalé radialement vers l'extérieur par rapport au centre d'action A du patin sur le disque, ce centre d'action se trouvant approximativement au centre de la garniture de friction 26 de ce patin. On engendre ainsi un couple C tendant à faire pivoter le patin 22 autour du point d'appui de la partie 54 contre le bord de la fenêtre 56 la plus proche de l'avant du frein, lorsque le disque 10 tourne dans le sens de la flèche F sur la figure 2. Ce couple C tend à faire pivoter le patin 22 de façon à amener au contact du bord périphérique 10c du disque 10 le pion 58 porté par à partie en saillie 54 située à l'arrière du patin 22, par rapport au sens de rotation F du disque.

La première conséquence de la venue en contact du pion 58 contre le bord périphérique 10c du disque est d'engendrer un bruit caractéristique qui avertit immédiatement le conducteur du véhicule de cette situation. De plus, le contact de friction entre le pion 58 et le bord périphérique 10c du disque compense partiellement la baisse d'efficacité du frein résultant de l'usure des garnitures de friction.

Enfin le pion vient mordre le bord périphérique du disque de façon suffisante pour endommager ce dernier irréversiblement.

Bien entendu, l'invention n'est pas limitée au mode de réalisation qui vient d'être décrit à titre d'exemple, mais en couvre toutes les variantes.

Ainsi, bien que l'exemple décrit concerne un frein à disque à étrier coulissant, l'invention s'applique également à un frein à disque à étrier fixe dans lequel l'étrier et l'organe support sont réalisés d'un seul tenant, le moyen de serrage comportant alors des moteurs de freins disposés de part et d'autre du disque.

Par ailleurs, au lieu de comprendre deux parties en saillie en forme d'oreille, chaque patin peut ne comprendre qu'une seule partie en saillie, de plus grande longueur, portant selon le cas un ou deux pions. Dans ce cas, l'étrier comporte également une lumière unique dans sa partie située au-dessus du disque, la partie en saillie de chaque patin étant reçue avec un jeu circonférentiel déterminé dans cette lumière.

Il est à noter que le patin de frein qui vient d'être décrit peut favorablement servir de patins de rechange et qu'un tel patin n'est pas nécessaire lors de la première montée du frein sur le véhicule puisque, dans ce cas, le disque est neuf. En effet, son usure est moins rapide que celle des garnitures de friction et il y aura au moins un changement de patins, avant l'apparition du danger précédemment décrit. Toutefois, l'étrier du frein doit toujours comporter les lumières décrites.

## Revendications

1. Frein à disque comprenant un étrier (36) chevauchant un disque de frein (10) et équipé de moyens de serrage (38) aptes à déplacer au moins deux patins de frein (22) vers les faces opposées (10a, 10b) du disque, chaque patin (22) étant logé et ancré dans une fenêtre (14) formée dans un organe support (12) et étant constitué par une plaque porte-garniture (24) et une garniture de friction (26), la dite plaque porte-garniture comportant au moins une partie (54) faisant saillie radialement au-delà du bord périphérique (10c) du disque et portant au moins un pion (58) faisant saillie axialement vers ledit disque (10) au-delà du bord périphérique (10c) de ce dernier, et formant un dispositif avertisseur sonore d'usure lorsque le pion (58) vient sur le bord périphérique du disque, caracterisé en ce que ladite partie (54) faisant saillie radialement pénètre dans une lumière (56) pratiquée dans ledit étrier (36) à cet effet avec un jeu circonférentiel déterminé et en ce que ledit pion (58) est réalisé en acier trempé, l'agencement étant tel que, lorsque l'espace (d) entre une face du disque (10) et la partie correspondante de l'organe support (12) devient, par suite de l'usure du disque (10) et des patins (2,), supérieur à l'épaisseur de la plaque porte-garniture (24) disposée en regard de ladite face du disque (10), la partie en saillie (54) puisse venir en appui sur le bord de la lumière (56) créant un couple amenant le pion (58) sur le bord périphérique (10c) du disque (10).

2. Frein à disque selon la revendication 1, caractérisé en ce que chaque plaque porte-garniture (24) comporte deux parties (54) faisant saillie radialement, disposées symétriquement par rapport à un plan médian (P) du frein contenant l'axe du disque (10, chaque partie faisant saillie portant un pion (58), ledit étrier (36) comportant deux lumières correspondantes (56).

3. Patin de frein (22) logé et ancré dans une fenêtre (14) formée dans un organe support (12) dudit patin prévu dans un frein à disque comprenant un étrier (36) chevauchant un disque de frein (10) et équipé de moyens de serrage (38) aptes à déplacer au moins deux patins de frein (22) vers les faces opposées (10a, 10b) du disque, ledit patin (22) étant constitué par une plaque porte-garniture (24) et une garniture de friction (26), ladite plaque porte-garniture comportant au moins une partie (54) faisant saillie radialement au-delà du bord périphérique (10c) du disque et portant au moins un pion (58) faisant saillie axialement vers ledit disque (10) au delà du bord périphérique (10c) de ce dernier et formant un dispositif avertisseur sonore d'usure lorsque le pion (58) vient sur le bord péripherique du disque, le patin (22) étant symétrique par rapport à un plan médian du pein contenant l'axe du disque, caractérise en ce que ladite partie (54) faisant saillie radialement pénètre dans une lumière (56) pratiquée dans ledit étrier (36) à cet effet avec un jeu circonférentiel déterminé et en ce que ledit pion (58) est réalisé en acier trempé, l'agencement étant tel que, lorsque l'espace (d) entre une face du disque(10) et la partie et la partie correspondante de l'organe support (12) devient, par suite de l'usure du disque (10) et des patins (22), supérieur à l'épaisseur de la plaque porte-garniture (24) disposée regard de ladite face du disque (10), la partie en saillie (54) puisse venir en appui sur le bord de la lumière (56) créant un couple amenant le pion (58) sur le bord périphérique (10c) du disque (10).

4. Patin selon la revendication 3, caractérisé en ce que chaque plaque porte-garniture (24) comporte deux parties (54) faisant saillie radialement disposées symétriquement par rapport à un plan médian (P) du frein contenant l'axe du disque (10), chaque paie faisant saillie portant un pion (58).

## Claims

1. Disk brake comprising a caliper (36) straddling a brake disk (10) and equipped with clamping means (38) designed to move at least two brake pads (22) towards the opposing faces (10a, 10b) of the disk, each pad (22) being accommodated and anchored inside an opening (14) formed in a support member (12) and consisting of a lining carrier plate (24) and a friction lining (26), the said lining carrier plate having at least one part (54) projecting radially beyond the peripheral edge (10c) of the disk and having mounted on it at least one stud (58) projecting axially towards the said disk (10) beyond the peripheral edge (10c) of the latter, and forming an audible wear-warning device when the stud (58) comes against the peripheral edge of the disc, characterized in that the said radially projecting part (54) penetrates, with a given circumferential clearance, inside an aperture (56) formed in the said caliper (36) for this purpose and in that the said stud (58) is made of hardened steel, the arrangement being such that when the gap (d) between one face of the disk (10) and the corresponding part of the support member (12) becomes greater than the thickness of the lining carrier plate (24) arranged opposite the said face of the disk (10) as a result of wear of the disk (10) and of the pads (22), the projecting part (54) is able to bear against the edge of the aperture (56), creating a torque which brings the stud (58) against the peripheral edge (10c) of the disk (10).

2. Disk brake according to Claim 1, characterized in that each lining carrier plate (24) has two radially projecting parts (54) arranged symmetrically in relation to a center plane (P) of the brake containing the axis of the disk (10), each projecting part having a stud (58) mounted on it, the said caliper (36) having two corresponding apertures (56).

3. Brake pad (22) accommodated and anchored inside an opening (14) formed in a support member (12) for the said pad provided in a disk brake comprising a caliper (36) straddling a brake disk (10) and equipped with clamping means (38) designed to move at least two brake pads (22) towards the opposing faces (10a, 10b) of the disk, the said pad (22) consisting of a lining carrier plate (24) and a friction lining (26), the said lining carrier plate having at least one part (54) projecting radially beyond the peripheral edge (10c) of the disk and having mounted on it at least one stud (58) projecting axially towards the said disk (10) beyond the peripheral edge (10c) of the latter and forming an audible wear-warning device when the stud (58) comes against the peripheral edge of the disk, the pad (22) being symmetrical in relation to a center plane of the brake containing the axis of the disk, characterized in that the said radially projecting part (54) penetrates, with a given circumferential clearance, inside an aperture (56) formed in the said caliper (36) for this purpose and in that the said stud (58) is made of hardened steel, the arrangement being such that when the gap (d) between one face of the disk (10) and the part and the corresponding part [sic] of the support member (12) becomes greater than the thickness of the lining carrier plate (24) arranged opposite the said face of the disk (10) as a result of wear of the disk (10) and of the pads (22), the projecting part (54) is able to bear against the edge of the aperture (56), creating a torque which brings the stud (58) against the peripheral edge (10c) of the disk (10).

4. Pad according to Claim 3, characterized in that each lining carrier plate (24) has two radially projecting parts (54) arranged symmetrically in relation to a center plane (P) of the brake containing the axis of the disk (10), each projecting part having a stud (58) mounted on it.

## Patentansprüche

1. Scheibenbremse, die einen eine Bremsscheibe (10) übergreifenden Bremssattel (36) aufweist und mit zur Verschiebung von wenigstens zwei Bremsklötzen (22) an zueinander entgegengesetzte Seiten (10a, 10b) der Scheibe geeigneten Preßmitteln (38) ausgerüstet ist, wobei jeder Bremsklotz (22) in einem in einem Trägerelement (12) ausgebildeten Fenster (14) untergebracht und verankert ist und von einer Belagträgerplatte (24) und einem Reibbelag (26) gebildet wird, wobei die Belagträgerplatte wenigstens ein in radialer Richtung über den Umfangsrand (10c) der Scheibe vorstehendes Teil (54) aufweist, das wenigstens einen jenseits des Umfangsrandes (10c) der Scheibe (10) in axialer Richtung zu dieser hin vorstehenden Stift (58) trägt, welcher eine akustische Verschleißanzeige bildet, wenn der Stift (58) an den Umfangsrand der Scheibe gelangt, dadurch gekennzeichnet, daß das in radialer Richtung vorstehende Teil (54) in eine im Bremssattel (36) zu diesem Zweck ausgebildete Öffnung (56) mit einem bestimmten Umfangsspiel eindringt und daß der Stift (58) aus gehärtetem Stahl hergestellt ist, wobei die Anordnung so ausgeführt ist, daß dann, wenn der Abstand (d) zwischen einer Seite der Scheibe (10) und dem entsprechenden Abschnitt des Trägerelements (12) durch Verschleiß der Scheibe (10) und der Bremsklötze (22) größer als die Dicke der gegenüber dieser Seite der Scheibe (10) angeordneten Belagträgerplatte (24) wird, das vorstehende Teil (54) in Anlage an den Rand der Öffnung (56) gelangen kann, was ein Moment erzeugt, welches den Stift (58) an den Umfangsrand (10c) der Scheibe (10) bringt.

2. Scheibenbremse gemäß Anspruch 1, dadurch gekennzeichnet, daS die Belagträgerplatte (24) zwei in radialer Richtung vorstehende Teile (54) aufweist, die in bezug auf eine die Achse der Scheibe (10) enthaltende Mittelebene (P) der Bremse symmetrisch angeordnet sind, wobei jedes vorstehende Teil einen Stift (58) trägt und wobei der Bremssattel (36) zwei entsprechende Öffnungen (56) aufweist.

3. Bremsklotz (22), der in einem Fenster (14) untergebracht und verankert ist, das in einem Trägerelement (12) des Bremsklotzes ausgebildet ist, das in einer Scheibenbremse vorgesehen ist, die einen eine Bremsscheibe (10) übergreifenden Bremssattel (36) aufweist und mit zur Verschiebung von wenigstens zwei Bremsklötzen (22) an zueinander entgegengesetzten Seiten (10a, 10b) der Scheibe geeigneten Preßmitteln (38) ausgerüstet ist, wobei der Bremsklotz (22) von einer Belagträgerplatte (24) und einem Reibbelag (26) gebildet wird und wobei die Belagträgerplatte wenigstens ein in radialer Richtung über den Umfangsrand (10c) der Scheibe vorstehendes Teil (54) aufweist, das wenigstens einen jenseits des Umfangsrandes (10c) der Scheibe (10) in axialer Richtung zu dieser hin vorstehenden Stift (58) trägt, welcher eine akustische Verschleißanzeige bildet, wenn der Stift (58) an den Umfangsrand der Scheibe gelangt, wobei der Bremsklotz (22) symmetrisch bezüglich einer die Achse der Scheibe enthaltenden Mittelebene der Bremse ist, dadurch gekennzeichnet, daß das in radialer Richtung vorstehende Teil (54) in eine im Bremssattel (36) zu diesem Zweck ausgebildete Öffnung (56) mit einem bestimmten Umfangsspiel eindringt und daß der Stift (58) aus gehärtetem Stahl hergestellt ist, wobei die Anordnung so ausgeführt ist, daß dann, wenn der Abstand (d) zwischen einer Seite der Scheibe (10) und dem entsprechenden Abschnitt des Trägerelements (12) durch Verschleiß der Scheibe (10) und der Bremsklötze (22) größer als die Dicke der gegenüber dieser Seite der Scheibe (10) angeordneten Belagträgerplatte (24) wird, das vorstehende Teil (54) in Anlage an den Rand der Öffnung (56) gelangen kann, was ein Moment erzeugt, welches den Stift (58) an den Umfangsrand (10c) der Scheibe (10) bringt.

4. Bremsklotz gemäß Anspruch 3, dadurch gekennzeichnet, daß die Belagträgerplatte (24) zwei in radialer Richtung vorstehende Teile (54) aufweist, die in bezug auf eine die Achse der Scheibe (10) enthaltende Mittelebene (P) der Bremse symmetrisch angeordnet sind, wobei jedes vorstehende Teil einen Stift (58) trägt.
